Europäisches Patentamt

**European Patent Office**

Office européen des brevets

(19)

(11) Numéro de publication: **0 194 167 B1**

# FASCICULE DE BREVET EUROPEEN

(12)

(45) Date de publication de fascicule du brevet: **06.05.92**  (51) Int. Cl.5: **G06F 15/20**

(21) Numéro de dépôt: **86400138.3**

(22) Date de dépôt: **23.01.86**

(54) **Installation informatisée pour la vente d'objets hautement individualisés.**

(30) Priorité: **24.01.85 FR 8500978**

(43) Date de publication de la demande:
**10.09.86 Bulletin 86/37**

(45) Mention de la délivrance du brevet:
**06.05.92 Bulletin 92/19**

(84) Etats contractants désignés:
**AT BE CH DE GB IT LI LU NL SE**

(56) Documents cités:
**FR-A- 2 492 561**
**US-A- 4 120 452**

**IBM TECHNICAL DISCLOSURE BULLETIN, vol. 25, no. 11B, avril 1983, pages 5892-5893, New York, US; S.N. ZILLES : "CATALOG-BASED ORDER ENTRY SYSTEM"**

**IBM TDB, Vol. 26, No. 3A, August 1983, page 1202 N. C. Strole: "Store system with distributed price look-up function.**

(73) Titulaire: **MANUFACTURE FRANCAISE DES CHAUSSURES ERAM S.A.R.L.**
**B.P. 10**
**F-49110 Saint Pierre Montlimart(FR)**

(72) Inventeur: **Biotteau, Gérard**
**Les Zinnias**
**F-49110 Saint Pierre Montlimart(FR)**

(74) Mandataire: **Dawidowicz, Armand Cabinet Dawidowicz**
**18, Boulevard Pereire**
**F-75017 Paris(FR)**

EP 0 194 167 B1

# Description

La présente invention concerne la vente d'objets hautement individualisés et notamment des chaussures qui sont individualisées par exemple par le modèle, la pointure, le coloris éventuellement la matière, et qui, pour la vente, doivent être prélevés parmi un stock pouvant comporter des milliers d'articles.

On a déjà mis en oeuvre l'informatique pour tenir et contrôler les stocks de tels objets, l'inventaire s'effectuant notamment par lecture manuelle des étiquettes codées figurant sur les boîtes avec un crayon de lecture relié à un micro-ordinateur portable comportant une mémoire, la mémoire étant, en fin d'opération, vidée dans l'ordinateur central.

On connaît par US-A 3.573.739 un système d'appel de personnes ou d'emplacements comprenant une pluralité de réceptacles reliés à une mémoire centrale vers laquelle des informations peuvent être envoyées par l'insertion d'un terminal portable ou carte dans l'un des réceptacles. Un tel système ne permet donc pas d'adresser la mémoire par les terminaux portables. De même, la lecture d'une information ne peut être faite que sur le réceptacle, après insertion du terminal portable dans le réceptacle en question. Le système comporte en outre un poste fixe d'accès au système, voisin de la mémoire centrale, qui est actionné par l'opérateur et lui indique la position d'un terminal portable. Ce système connu ne permet pas d'interroger la mémoire centrale à partir d'un terminal portable.

On a également proposé (voir IBM Technical Disclosure Bulletin, IBM TDB, volume 26, N°3a, Août 1983, page 1202, Article "Store system with distributed price look-up fonction") un système de gestion de magasin dans lequel une pluralité de terminaux sont connectés à une mémoire centrale par un réseau local. En variante, ce document prévoit que la mémoire est divisée entre les terminaux. Ce système connu ne permet qu'une interrogation, par des points de vente fixes, sur une donnée fixe telle que le prix. Il ne permet donc pas de fournir une réponse à une question complexe concernant l'existence ou l'absence en stock d'un objet tel que des chaussures, depuis un emplacement quelconque dans le magasin sur un terminal portable, et d'obtenir la réponse sur le même terminal.

La vente serait pourtant facilitée s'il était possible, à partir de certaines caractéristiques du modèle recherché, de faire connaître à la cliente les modèles répondant à ces caractéristiques qui se trouvent en stock sans que le choix soit limité au choix aléatoire de certains modèles par la seule vendeuse.

Il est en outre certain que l'interrogation d'un ordinateur central à l'aide d'un clavier est souvent sujette à des erreurs dans le codage surtout lorsque la personne qui manipule est simultanément soumise à d'autres sujétions telles que la conversation avec l'acheteur.

La présente invention a pour but de remédier aux inconvénients ci-dessus et d'assurer une vente plus efficace et beaucoup plus rapide d'objets hautement individualisés se trouvant dans la réserve du magasin de vente.

A cet effet, l'invention a pour objet une installation informatisée pour la vente d'objets hautement individualisés du type comportant un ordinateur central avec au moins une mémoire adressable contenant toutes les informations sur le stock, et une pluralité de terminaux portables reliés audit ordinateur central par un réseau d'interconnexion permettant l'interconnexion de chaque terminal portable en une multiplicité de points répartis sur toute la surface de vente, chaque terminal comportant un moyen d'affichage, en ce que ledit réseau d'interconnexion etant un réseau hertzien de faible puissance du type à modulation de fréquence, l'ordinateur central et chacun des terminaux portables etant munis d'un micro-émetteur-récepteur en modulation de fréquence, de manière à permettre une communication de chaque terminal portable vers l'ordinateur central et de l'ordinateur central vers un terminal portable ayant adressé la mémoire dudit ordinateur central avec un affichage de la réponse sur ledit moyen d'affichage.

Selon une autre caractéristique, l'entrée des terminaux portables est assurée par un lecteur de code. Cette caractéristique permet de supprimer le clavier et les aléas d'une entrée manuelle, l'information transmise en entrée pouvant être lue par exemple sur une étiquette accompagnant le modèle exposé, sur un catalogue, sur un tableau des pointures, sur un nuancier ou sur un afficheur visuel à tube cathodique ou analogue, conformément au perfectionnement décrit ci-après, ou sur tout autre tableau de codes.

Selon une autre caractéristique, chaque terminal portable comporte un clavier de sélection d'opération de vente avec des touches correspondant à deux ou plusieurs des opérations suivantes : interrogation de la mémoire du stock, commande de réalisation de la vente qui peut elle-même commander la sortie de l'article de la mémoire du stock, l'entrée dans la saisie des ventes journalières et du réapprovisionnement, la commande de l'imprimante de la caisse pour l'établissement du débit, etc.

Selon une autre caractéristique, au moins certains terminaux de l'installation comportent une fonction d'interrogation de la mémoire du stock en fonction de caractéristiques autres que celles individualisant un objet précis, avec affichage visuel. Cette fonction permet à la vendeuse de présenter à la cliente les modèles disponibles correspondant à sa pointure et/ou au coloris recherché et/ou au genre recherché par exemple "escarpin talon moyen" et/ou à une marge de prix.

L'interrogation de la mémoire du stock peut dans ce cas et du fait que l'affichage de la réponse peut être complexe, être effectuée sur un terminal fixe du type à entrée par clavier ou par tableau de codes. L'affichage visuel peut être assuré par sélection automatique dans un stock catalogue, par exemple un stock de diapositives correspondant aux différents modèles, avec projection, éclairement ou identification par tout moyen des modèles disponibles ou, de préférence, par projection sur tube cathodique du ou des modèles répondant à l'interrogation, parmi les modèles du catalogue enregistrés sur vidéocassette, qui sont disponibles. L'affichage visuel s'accompagne de préférence de l'affichage du code du modèle.

Selon un mode de réalisation particulier, l'affichage visuel est constitué par un recueil de planches comportant les photographies des modèles, chaque photographie comportant un tableau associé des nuances et/ou des pointures et l'ordinateur commandant l'affichage sur le tableau associé des nuances et/ou des pointures disponibles.

Selon un mode de réalisation préférentiel les terminaux à entrée par lecteur de codes comportent une mémoire d'entrée pour l'enregistrement au préalable du bloc à transmettre, bloc qui peut être standardisé avec contrôle des entrées dans les différents mots par des touches spécialisées, l'émission du bloc se faisant par une touche d'émission qui, comme exposé ci-dessus, peut être spécifique de l'opération de vente. Pour faciliter l'utilisation de la mémoire,chaque bloc est visualisé sous forme des mots le constituant avec indication de l'occupation ou de l'acquittement du mot, éventuellement de la teneur du mot en mémoire. Ceci permet de déterminer visuellement si tous les mots du bloc, utiles pour l'opération à commander, sont correctement remplis.

D'autres caractéristiques de la présente invention apparaîtront à la lecture de la description faite ci-après avec référence au dessin ci-annexé dans lequel:

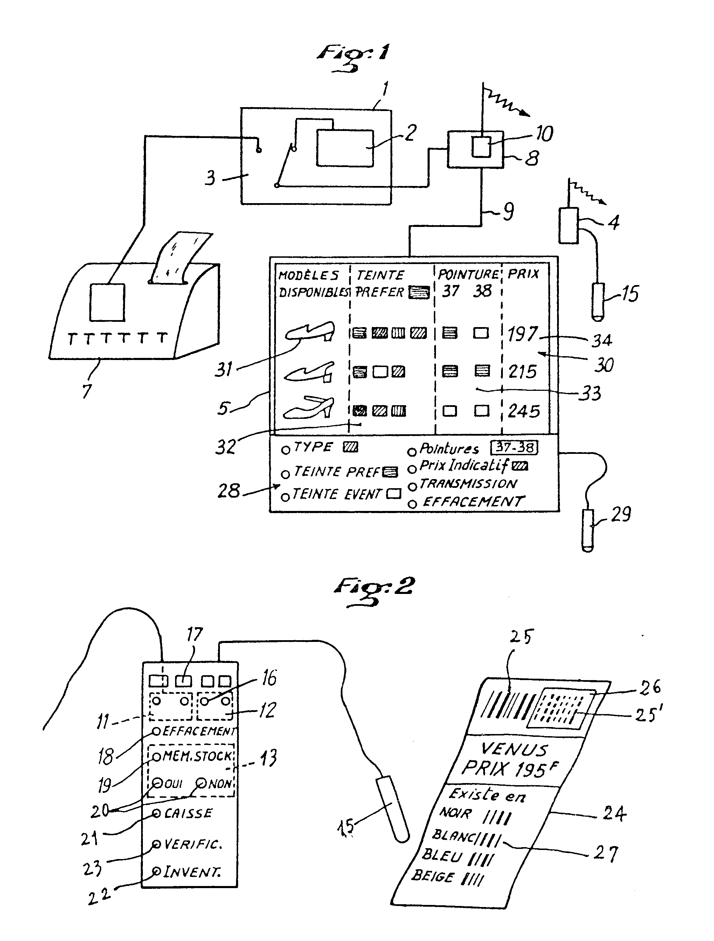

La figure 1 est un schéma d'ensemble d'une installation donnée à titre d'exemple et la figure 2 est une vue en élévation d'un exemple de terminal portable à la disposition de chaque vendeuse.

Les détails des micro-émetteurs-récepteurs, des lecteurs de codes, des micro-ordinateurs associés, de l'ordinateur central avec les circuits d'entrée en mémoire, d'exploration de la mémoire et autres qui sont bien connus dans d'autres applications et dans des combinaisons différentes ne seront pas décrits en détail et ils sont à la portée du spécialiste en électronique.

L'organe principal de l'installation est un ordinateur 1 comportant une mémoire de stock 2 dans laquelle sont inscrits individuellement tous les articles du stock avec leurs caractéristiques d'individualisation codées savoir notamment le modèle, la pointure, le coloris et éventuellement d'autres indications exploitables. Le classement en mémoire pourrait être aléatoire mais il est de préférence systématisé de manière à constituer une mémoire catalogue avec classement par les numéros de code des modèles et éventuellement le prix, la pointure et le coloris dans l'ordre croissant des caractéristiques individualisantes avec, pour chaque modèle de chaque pointure et de chaque coloris, le nombre des articles en stock, la mémoire étant associée avec un moyen connu d'adressage et de lecture d'au moins la présence ou l'absence d'un nombre, au moins égal à un, d'articles en stock. L'ordinateur comporte d'autre part un compteur décompteur susceptible d'augmenter, lors de la rentrée en stock, ou de réduire, lors de la vente, le nombre des articles en stock figurant à l'adresse correspondante. Enfin l'ordinateur peut comporter, en combinaison avec ladite mémoire du stock, un étage comparateur entre le nombre d'articles en stock figurant à une adresse et le nombre de fois où au cours de l'inventaire apparait ladite adresse.

L'ordinateur comporte, d'autre part, un sélecteur commutateur 3 susceptible de mettre en communication avec la mémoire du stock 2 des terminaux périphériques tels que notamment un terminal portable 4 ou un terminal d'interrogation 5, ou de mettre en communication l'un de ces terminaux avec la caisse enregistreuse 7 pour effectuer l'impression du débit.

L'ordinateur est d'autre part associé à un modulateur-démodulateur 8 transformant la sortie de l'ordinateur en un signal modulé transmissible par voie téléphonique 9 ou, par l'intermédiaire d'un micro-émetteur-récepteur 10, par voie hertzienne et transformant les signaux reçus par les deux mêmes voies en entrées pour l'ordinateur.

Les terminaux portables 4 comportent un micro-émetteur-récepteur 11 associé à un modulateur-démodulateur 12 constituant l'interface entre une mémoire 13 et le réseau hertzien. Cette mémoire, dans le mode de réalisation préférentiel, peut stocker, dans des adresses-mots, les caractéristiques d'identification d'un article savoir au minimum, dans le cas des chaussures, le code du modèle, le code de la pointure, le code du coloris et le code du prix. Ces codes pourraient être introduits par un clavier prévu sur le boîtier du terminal mais, selon un mode de réalisation préférentiel, ces codes sont introduits par un lecteur de code à barres 15 associé à un démodulateur, le mot du bloc étant envoyé à l'adresse correspondante de la mémoire par enfoncement du bouton 16 correspondant et l'indication que ce mot est entré ou l'indication de la valeur entrée apparaissant sur des afficheurs 17. Le terminal comporte de préférence des moyens d'effacement 18 soit d'un mot, soit de la totalité de la mémoire, ce qui permet de modifier par exemple la pointure demandée si celle annoncée par la cliente est trop petite ou le modèle, si celui envisagé à l'origine est indisponible. Le boîtier du terminal portable comporte, d'autre part, un clavier d'adressage du contenu de la mémoire. Les touches prévues peuvent comporter une touche 19 d'interrogation de la mémoire du stock 2 avec deux affichages sous forme de diodes électroluminescentes 20 pour indiquer la présence ou l'absence en stock de l'article défini par le bloc en mémoire, une touche 21 de commande du débit à la caisse enregistreuse 7, une touche 22 permettant l'utilisation du terminal pour effectuer un inventaire manuel et une touche 23 permettant de vérifier avec le lecteur de code 15 que les deux chaussures portent bien le même code que celui indiqué sur la boîte et qu'il n'y a pas eu d'échange.

Les lectures des codes avec le lecteur de code 15, peuvent se faire, pour leur totalité ou pour partie, lorsque l'introduction par clavier est préférée par exemple pour la pointure, en ce qui concerne le modèle de la chaussure sur l'étiquette de vitrine 24 sur laquelle la partie 25' du code 25, partie 25' qui est spécifique de l'article exposé (pointure et coloris) a été masquée par un autocollant 26, en ce qui concerne la pointure sur un tableau des pointures et en ce qui concerne le coloris sur un nuancier qui peut figurer sur l'étiquette de vitrine en 27 ou sur un nuancier à la disposition de la vendeuse. Le prix est de préférence lu sur l'étiquette codée de l'article lui-même.

En ce qui concerne le terminal d'interrogation 5 pour lequel le modèle de l'article recherché n'est a priori pas déterminé, il est nécessaire de transposer visuellement en une image de l'article le code du modèle ou les codes des modèles correspondant à l'interrogation posée à la mémoire du stock 2. Le terminal comporte donc un clavier d'interrogation 28 associé à un clavier d'entrée ou à un lecteur de code d'entrée 29. Le clavier d'interrogation a pour but de remplir les différents mots du bloc d'interrogation transmis à la mémoire du stock 2. Ce bloc comporte par exemple une indication de type, exemple "escarpin talon moyen", substituée à l'identification du modèle, une indication de la pointure ou en cas de doute des deux pointures possibles, une indication de la teinte souhaitée et éventuellement des teintes acceptées en variante, éventuellement une indication des limites de prix.

On prévoit également sur ce clavier au moins une touche de transmission à la mémoire du stock et une touche d'effacement.

L'affichage de la réponse de la mémoire du stock peut se faire par exemple sur tube cathodique 30 par affichage d'un dessin ou d'une photographie 31 du modèle, des coloris 32 disponibles dans la pointure demandée, des pointures 33 disponibles dans la teinte préférentielle demandée et du prix 34.

## Revendications

1. Une installation informatisée pour la vente d'objets hautement individualisés du type comportant un ordinateur central (1) avec au moins une mémoire adressable (2) contenant toutes les informations sur le stock, et une pluralité de terminaux portables (4) reliés audit ordinateur central (1) par un réseau d'interconnexion permettant l'interconnexion de chaque terminal portable (4) en une multiplicité de points répartis sur toute la surface de vente, chaque terminal (4) comportant un moyen d'affichage (20), ledit réseau d'interconnexion etant un réseau hertzien de faible puissance du type à modulation de fréquence, l'ordinateur central (1) et chacun des terminaux portables (4) etant munis d'un micro-émetteur-récepteur (11) en modulation de fréquence, de manière a permettre une communication de chaque terminal portable (4) vers l'ordinateur central (1) et de l'ordinateur central (1) vers un terminal portable (4) ayant adressé la mémoire (2) dudit ordinateur central (1) avec un affichage de la réponse sur ledit moyen d'affichage (20).

2. Une installation selon la revendication 1, caractérisée en ce que l'entrée des terminaux portables (4) est assurée par un lecteur de code (15).

3. Une installation selon l'une quelconque des revendications 1 et 2, caractérisée en ce que chaque terminal portable comporte un clavier de sélection d'opérations de vente avec des touches correspondant à deux ou plusieurs des opérations suivantes : interrogation de la mémoire du stock (19, commande de réalisation de la vente (21) qui peut elle-même commander la sortie de l'article de la mémoire du stock, l'entrée dans la saisie des ventes journalières et du réapprovisionnement, la commande de l'imprimante de la caisse pour l'établissement du débit, etc.

**4.** Une installation selon l'une quelconque des revendications 1 à 3, caractérisée en ce que au moins certains terminaux (5) de l'installation comportent une fonction d'interrogation de la mémoire du stock (12) en fonction de caractéristiques autres que celles individualisant un objet précis, avec affichage visuel.

**5.** Une installation selon la revendication 4, caractérisée en ce que l'affichage visuel est assuré par sélection automatique dans un stock catalogue, par exemple un stock de diapositives correspondant aux différents modèles, avec projection, éclairement ou identification par tout moyen des modèles disponibles.

**6.** Une installation selon la revendication 4, caractérisée en ce que l'affichage visuel est assuré par projection sur tube cathodique (30) du ou des modèles (31) répondant à l'interrogation, parmi les modèles du catalogue enregistrés sur vidéo-cassette, qui sont disponibles.

**7.** Une installation selon la revendication 4, caractérisée en ce que l'affichage visuel est constitué par un recueil de planches comportant les photographies des modèles, chaque photographie comportant un tableau associé des nuances et/ou des pointures et l'ordinateur (1) commandant l'affichage sur le tableau associé des nuances et/ou des pointures disponibles.

**8.** Une installation selon l'une quelconque des revendications 1 à 7, caractérisée en ce que l'entrée des terminaux (4-5) est assurée par un lecteur de codes (15-29).

**9.** Une installation selon la revendication 8, caractérisée en ce que les terminaux à entrée par lecteur de codes (15-29) comportent une mémoire d'entrée (13) pour l'enregistrement au préalable du bloc à transmettre, bloc qui peut être standardisé avec contrôle des entrées dans les différents mots par des touches spécialisées (16), l'émission du bloc se faisant par une touche d'émission (19 à 23) qui est spécifique de l'opération de vente.

## Claims

**1.** An informatized installation for the sale of objects highly individualized of the type including a central computer (1) with at least one addressable memory (2) containing all the information about the stock, and a plurality of portable terminals (4) connected to said central computer (1) by an interconnecting network allowing the interconnecting of each portable terminal (4) at a plurality of points distributed over the selling surface, each terminal (4) including a display means (20), said interconnecting network being a radio network of small power of the frequency modulation type, the central computer (1) and each one of the portable terminals (4) being provided with a micro-transmitter-receiver (11) with frequency modulation so as to allow the communication of each portable terminal (4) toward the central computer (1) and of the central computer (1) toward a portable terminal having addressed the memory (2) of said central computer (1) with a display of the answer on said display means (20).

**2.** An installation according to claim 1, characterized in that the input of the portable terminal (4) is provided by a code reader (15).

**3.** An installation according to any one of claims 1 and 2, characterized in that each portable terminal includes a selection keyboard for the selling operations with keys corresponding to two or several of the following operations: interrogation of the stock memory (19), control of the realization of the sale (21) which can in turn control the exit of the article from the stock memory, the input in the acquisition of daily sales and replenishments, the control of the printer of the cash register for the establishment of the debit note, etc.

**4.** An installation according to any one of claims 1 to 3, characterized in that at least some terminals (5) of the installation include an interrogation function of the stock memory (12) as a function of characteristics others than those individualizing a precise object, with a visual display.

**5.** An installation according to claim 4, characterized in that the visual display is provided by an automatic selection in a stock catalogue, for example a stock of slides corresponding to the various models, with projection, illumination, or identification by any means of the available models.

**6.** An installation according to claim 4, characterized in that the visual display is provided by a projection on a cathode ray tube (30) of the model or models (31) corresponding to the interrogation, amongst the catalogue models recorded on a video cassette, which are available.

7. An installation according to claim 4, characterized in that the visual display is made of a collection of plates with photographies of the models, each photography including an associated table of the colours and/or sizes and the computer (1) controlling the display on the associated table of the available colours and/or sizes.

8. An installation according to any one of claims 1 to 7, characterized in that the input of the terminals (4-5) is ensured by a code reader (15-29).

9. An installation according to claim 8, characterized in that the terminals with input by a code reader (15-29) include an input memory (13) for the preliminary recording of the block to be transmitted, which block can be standardized with a control of the inputs in the various words by specialized keys (16), the transmission of a block being made by a transmission key (19 to 23) which is specific to the sale operation.

## Patentansprüche

1. Informatisierte Anlage zum Verkauf von hoch individualisierten Gegenständen, die eine zentrale Datenverarbeitungsanlage (1) umfaßt mit wenigstens einem adressierbaren Speicher (2), der sämtliche Lagerbestandsinformationen enthält, und mit mehreren tragbaren Terminals (4), die an die zentrale Datenverarbeitungsanlage (1) über ein Verbundnetz angeschlossen sind, das den Anschluß jedes tragbaren Terminals (4) an eine Vielfalt von Punkten gestattet, die über die gesamte Verkaufsfläche verteilt sind, wobei jedes Terminal (4) eine Anzeigeeinrichtung (20) aufweist, das Verbundnetz ein frequenzmoduliertes Richtpunktnetz geringer Leistung ist, die zentrale Datenverarbeitungsanlage (1) und jedes der tragbaren Terminals (4) mit einem frequenzmodulierten Kleinstsender/Empfänger (11) ausgestattet sind, dergestalt, daß eine Verbindung von jedem tragbaren Terminal (4) zur zentralen Datenverarbeitungsanlage (1) und von der zentralen Datenverarbeitungsanlage (1) zu einem tragbaren Terminal (4) herstellbar ist, wobei der Speicher (2) der zentralen Datenverarbeitungsanlage (1) adressierbar ist mit einer Anzeige der Antwort auf der Anzeigeeinrichtung (20).

2. Informatisierte Anlage nach Anspruch 1, **dadurch gekennzeichnet**, daß der Eingang der tragbaren Terminals (4) durch einen Lesecode (15) gesichert ist.

3. Informatisierte Anlage nach Anspruch 1 oder 2, **dadurch gekennzeichnet**, daß jedes tragbare Terminal eine Auswahltastatur für Verkaufsvorgänge aufweist mit Tasten, die zwei oder mehreren der folgenden Operationen entsprechen: Abfrage des Lagerbestandsspeichers (19), Befehl zur Realisierung des Verkaufs (21), der selbst das Auswählen des Artikels aus dem Lagerbestand speichert, die Eingabe in die tägliche Verkaufserfassung und die Wiedereinlagerung, den Kassendruckbefehl zur Erstellung der Rechnung etc. steuert.

4. Informatisierte Anlage nach einem der Ansprüche 1 bis 3, **dadurch gekennzeichnet**, daß wenigstens bestimmte Installationsterminals (5) eine Abfragefunktion für den Lagerbestandsspeicher (12) mit optischer Anzeige umfassen im Zusammenhang mit anderen Charakteristika als der Individualisierung eines bestimmten Gegenstandes.

5. Informatisierte Anlage nach Anspruch 4, **dadurch gekennzeichnet**, daß die optische Anzeige gesichert ist durch automatische Auswahl aus einem Bestandskatalog, beispielsweise einem unterschiedlichen Mustern entsprechenden Diapositivvorrat, mit Projektion, Beleuchtung oder Identifikation durch jedes Mittel verfügbarer Muster.

6. Informatisierte Anlage nach Anspruch 4, **dadurch gekennzeichnet**, daß die optische Anzeige gesichert ist durch Abbildung des oder der Muster (31) auf einem Bildschirm (30) als Antwort auf eine Abfrage unter den auf Videokassetten registrierten verfügbaren Mustern.

7. Informatisierte Anlage nach Anspruch 4, **dadurch gekennzeichnet,** daß die optische Anzeige bewerkstelligt wird durch eine Erfassung von Fotografien der Muster aufweisenden Tafeln, wobei jede Fotografie eine Farbtönen und/oder Größen zugeordnete Tabelle aufweist und die Datenverarbeitungsanlage (1) die Anzeige auf der verfügbaren Farbtönen und/oder Größen zugeordneten Tabelle steuert.

8. Informatisierte Anlage nach einem der Ansprüche 1 bis 7, **dadurch gekennzeichnet**, daß die Terminaleingänge (4 bis 5) durch einen Lesecode (15 bis 29) gesichert sind.

9. Informatisierte Anlage nach Anspruch 8, **dadurch gekennzeichnet**, daß die Terminals mit Lesecodeeingang (15 bis 29) einen Eingabespeicher (13) für vorrangige Registrierung eines Übertragungsblockes aufweisen, der standardisiert sein kann mit Eingabekontrolle in den verschiedenen Worten durch spezielle Tasten (16), wobei die Blockabgabe durch eine Abgabetaste (19 bis 23) erfolgt, die für den Verkaufsvorgang spezifisch ist.

*Fig:1*

*Fig:2*